# EUROPÄISCHE PATENTSCHRIFT

(11) **EP 2 909 050 B1**
(45) Veröffentlichungstag und Bekanntmachung des Hinweises auf die Patenterteilung: **22.11.2017**
(21) Anmeldenummer: 13776796.8
(22) Anmeldetag: 14.10.2013
(51) Int. Cl.: B60J 1/00, B60J 1/10, B32B 27/08, B60Q 1/26, B32B 27/20

(54) **POLYMERE FAHRZEUGSCHEIBE MIT LED-ANORDNUNG**
VEHICLE WINDOW WITH LED ASSEMBLY
VITRE DE VEHICULE AVEC AGENCEMENT DE DEL

(30) Priorität: 19.10.2012 EP 12189245
(43) Veröffentlichungstag der Anmeldung: 26.08.2015
(73) Patentinhaber: Saint-Gobain Glass France, 92400 Courbevoie (FR)
(72) Erfinder: BENYAHIA, Rym, 70188 Stuttgart (DE); ANDERLINI, Daniel, F- 25530 Chevigney les Vercel (FR); GERARD, Emmanuel, F-25170 Noironte (FR)
(74) Vertreter: Gebauer, Dieter Edmund
(86) Internationale Anmeldenummer: PCT/EP2013/071394
(87) Internationale Veröffentlichungsnummer: WO 2014/060338

(56) Entgegenhaltungen:
- DE-A1- 19 706 043
- DE-A1-102008 045 447
- FR-A1- 2 738 783
- US-A- 6 116 678

## Beschreibung

Die Erfindung betrifft eine polymere Fahrzeugscheibe mit LED-Anordnung, ein Verfahren zu deren Herstellung und deren Verwendung.

Im Zuge immer strengerer Vorgaben zur Kohlendioxidemission von Kraftfahrzeugen gibt es starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Formteile aus polymeren Werkstoffen können dabei in praktisch jeder gewünschten Form und Geometrie hergestellt werden. Spezielle Hochleistungskunststoffe wie Aramide, beispielsweise Kevlar, weisen sehr hohe Festigkeiten und Stabilitäten auf.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtigere Rolle. Vor allem in der Automobilindustrie sind neben mechanischen Eigenschaften auch Merkmale im Bereich des Designs und der Ästhetik von großer Bedeutung.

Um verschiedene Merkmale in polymeren Werkstoffen zu vereinen, werden diese aus unterschiedlich geformten und aus unterschiedlich beschaffenen Grundmaterialien zusammengesetzt. Etablierte Verfahren zur Herstellung dieser Werkstoffe umfassen Zwei- oder Mehr-Komponenten-Spritzgussverfahren. Auf diese Art und Weise ist es möglich, Merkmale wie beispielsweise Witterungsbeständigkeit, Oberflächenglanz und Bruchbeständigkeit oder Torsionsstabilität miteinander zu vereinen. Zudem können die Anteile sehr teurer Werkstoffe reduziert werden.

DE 196 33 959 A1 offenbart einen Formkörper aus einem Träger und einem äußeren Zierfilm. Der äußere Film besitzt eine Zier- und eine Schutzschicht, wobei die Schutzschicht aus einer photopolymerisierbaren Harzzusammensetzung besteht.

WO 2006/094484 A1 offenbart ein Verfahren zur Herstellung eines flächigen, zwei Komponenten enthaltenden Kunststoffkarosserieteils. In einer bevorzugten Ausführungsform bestehen die erste Komponente aus einem transparenten Polycarbonat und die zweite Komponente aus einem opaken Polycarbonat.

DE 197 22 551 A1 offenbart ein Verfahren zur Herstellung von Kunststoffteilen im ZweiKomponenten-Spritzgussverfahren.

EP 1 695 808 A1 offenbart ein Zierteil für ein Kraftfahrzeug, beispielsweise eine Zierleiste. Das Zierteil umfasst ein Trägerteil aus einem thermoplastischen Kunststoff und ein Deckteil. Das Zierteil wird bevorzugt über einen Mehrkomponenten-Spritzgussprozess hergestellt.

FR 2 738 783 A1 wird als nächstliegender Stand der Technik angesehen und offenbart eine Scheibe mit integrierter Beleuchtungsfunktion. Fahrzeugfenster in Kraftfahrzeugen, beispielsweise Seitenfenster oder Rückfenster, werden in der Regel aus Glas hergestellt. Glas und seine umliegenden Karosserieteile lassen sich jedoch nur im begrenzten Maße biegen und in seiner Form variieren. Sollen die Fahrzeugfenster noch zusätzlich schlüssig mit elektronischen Bauteilen verbunden werden, so gestaltet sich dies schwierig. Aufgrund ihrer geringen Größe und niedrigen Energie spielen LEDs im Fahrzeugbau eine zunehmend größere Rolle.

Die Erfindung hat die Aufgabe, eine Fahrzeugscheibe bereitzustellen, welche in unterschiedlichen Formen gefertigt werden kann und gleichzeitig eine Beleuchtungsfunktion integrieren kann.

Die Aufgabe der Erfindung wird durch eine polymere Fahrzeugscheibe gemäß Anspruch 1 gelöst. Bevorzugte Ausführungen gehen aus den Unteransprüchen hervor.

Das erfindungsgemäße Verfahren zur Herstellung der polymeren Fahrzeugscheibe und deren Verwendung für Fahrzeuge gehen aus weiteren unabhängigen Ansprüchen hervor. Bevorzugte Ausführungen gehen aus den Unteransprüchen hervor.

Die erfindungsgemäße polymere Fahrzeugscheibe umfasst mindestens ein Verbundbauteil. Dieses Verbundbauteil umfasst eine innere opake polymere Schicht und eine äußere transparente polymere Schicht. Der Ausdruck "innere" bezieht sich im Sinne der Erfindung auf die dem Fahrzeuginnenraum zugewandte Seite der eingebauten Scheibe. Der Ausdruck "äußere" bezieht sich auf die nach außen gerichtete Seite der Fahrzeugscheibe. Der Ausdruck polymere Schicht umfasst im Sinne der Erfindung polymere Werkstücke. Die innere opake polymere Schicht und die äußere transparente polymere Schicht sind flächig fest miteinander verbunden. Die innere opake, polymere Schicht beinhaltet mindestens eine zumindest teilweise durchgehende Ausnehmung. Es sind bevorzugt mehrere Ausnehmungen in geringem Abstand, beispielsweise 0,2 cm bis 10 cm, besonders bevorzugt 0,5 cm bis 3 cm, angeordnet. Der Ausdruck "Ausnehmung" beschreibt Durchbohrungen oder Löcher innerhalb der polymeren Schicht. In der Ausnehmung ist eine LED-Anordnung mit mindestens einer LED oder auch OLED, einer Platine (PCB, Printed Circuit Board) und einer elektrischen Kontaktierung angeordnet. Die Platine umfasst handelsübliche Leiterplatten und/oder Platinen. Diese bestehen aus elektrisch isolierenden Materialien, auf denen elektrische Verbindungen angebracht sind. Beispiele für isolierende Materialien sind nicht leitfähige Polymere wie mit Epoxydharz getränkte Glasfaser, Teflon, Keramik und/oder Polyesterfolie. Die elektrischen Verbindungen, beispielsweise Leitungsdrähte, enthalten bevorzugt Kupfer, Eisen, Zinn, Nickel, Gold, Silber und/oder Legierungen davon. Auf der Platine werden die LEDs befestigt und über die elektrischen Verbindungen kontaktiert. Der elektrische Anschluss stellt die Verbindung zur Stromquelle her. Bevorzugt ist zwischen dem elektrischen Anschluss und der Stromquelle noch eine Steuervorrichtung angeordnet. Diese Steuervorrichtung ermöglicht die gezielte Beleuchtung einzelner LEDs. Durch die Anordnung verschiedenfarbiger LEDs auf der LED-Leiterplatte lassen sich auch farbige Lichteffekte erzeugen. Die LED-Anordnung ist so innerhalb der Ausnehmung platziert, dass die LEDs in Richtung der äußeren transparenten Schicht platziert sind. Das von den LEDs emittierte Licht kann somit direkt durch die äußere transparente polymere Schicht nach draußen emittiert werden. Die äußere transparente polymere Schicht weist bevorzugt eine mittlere optische Transparenz von mehr als 60 %, bevorzugt mehr als 80 %, im Bereich von 400 nm bis 800 nm auf. Die hohe optische Transparenz verleiht dem polymeren Deckteil ein glasähnliches Aussehen bei nur geringem Eigengewicht und einer hohen Verformbarkeit.

Zusätzlich sind die Ausnehmungen der inneren opaken Schicht vor Feuchtigkeit und Witterung geschützt. In Abhängigkeit von der Gestaltung der transparenten Schicht, können die Ausnehmungen und die LEDs zudem optisch versteckt werden, so dass nur das emittierte Licht sichtbar wird.

Die erfindungsgemäße polymere Fahrzeugscheibe ist in einer bevorzugten Ausgestaltung eine Seitenscheibe, insbesondere eine feststehende hintere Seitenscheibe. Die erfindungsgemäße polymere Fahrzeugscheibe ist in einer weiteren bevorzugten Ausgestaltung eine Heckscheibe.

Die äußere transparente polymere Schicht weist bevorzugt eine Erhöhung oder Vertiefung im Bereich der Ausnehmung der benachbart liegenden inneren opaken polymeren Schicht auf. Diese Erhöhung oder Vertiefung kann die LED-Anordnung innerhalb der Ausnehmung optisch hervorheben.

Die Ausnehmung mit der LED-Anordnung weist bevorzugt eine Abdeckung auf. Diese Anordnung schützt die LED-Anordnung vor Schmutz und Feuchtigkeit aus dem Fahrzeuginnenraum.

Die äußere transparente polymere Schicht weist bevorzugt eine Zusatzausnehmung im Bereich oberhalb der Ausnehmung der inneren opaken polymeren Schicht auf.

Die Ausnehmung und/oder Zusatzausnehmung weisen zudem bevorzugt eckige oder abgerundete, besonders bevorzugt kreisförmige, schlitzförmige und/oder abgerundete Flächen oder Einschnitte auf. Diese Einschnitte können das von der LED emittierte Licht brechen oder reflektieren. Auf diese Art und Weise können weitere optische Effekte im Bereich der LED- Anordnung erzeugt werden.

Die innere opake polymere Schicht und die äußere transparente polymere Schicht enthalten bevorzugt Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, bevorzugt Acrylnitril-Butadien-Styrol (ABS), Acrylester-Styrol-Acrylnitril (ASA), Acrylnitril-Butadien-Styrol - Polycarbonat (ABS/PC), Polyethylenterephthalat - Polycarbonat (PET/PC) und/oder Copolymere oder Gemische davon.

Die äußere transparente polymere Schicht Polycarbonate enthält bevorzugt Polycarbonate (PC), Polymethylmethacrylat (PMMA), Styrol-Acrylnitril (SAN) und/oder Copolymere oder Gemische davon.

Die äußere transparente polymere Schicht enthält bevorzugt einen Hardcoat, bevorzugt thermische- oder UV-härtende Lacke, besonders bevorzugt Polysiloxane, Polyacrylate, Polymethacrylate und/oder Gemische oder Copolymere davon enthält. Der Hardcoat verbessert die Beständigkeit gegenüber mechanischen Kratzbeschädigungen, Witterungseinflüssen, Temperaturschwankungen, UV-Strahlung und/oder aggressiven Chemikalien aus der Luft oder dem Spritzwasser. Zusätzlich kann der Hardcoat auch noch dekorative Funktionen wahrnehmen.

Die innere opake polymere Schicht enthält bevorzugt anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Die Füllstoffe können die Stabilität des Trägerteils weiter erhöhen. Zudem können die Füllstoffe den Anteil an polymeren Materialien verringern und so die Herstellungskosten des Bauteils vermindern.

Die innere opake polymere Schicht weist bevorzugt großflächige Fensterausnehmungen, besonders bevorzugt im Bereich von 20 Volumen % bis 80 Volumen %, der inneren opaken polymeren Schicht, auf. Diese Fensterausnehmungen werden von der äußeren transparenten polymeren Schicht abgedeckt und bilden den durchsichtigen Fensterbereich.

Die LED-Anordnung ist bevorzugt mit Lichtleitern verbunden. Diese Lichtleiter können im Bereich der Ausnehmungen, an oder durch die äußere transparente Schicht verlegt werden und somit zusätzliche optische Lichteffekte erzeugen.

Die Erfindung umfasst des Weiteren ein Verfahren zur Herstellung einer polymeren Fahrzeugscheibe, wobei in einem ersten Schritt ein Verbundbauteil umfassend eine innere opake polymere Schicht und eine äußere transparente polymere Schicht in einem 2-Komponentenspritzgussverfahren oder 2-Komponentenspritzprägeverfahren erhalten wird. Die innere opake polymere Schicht weist mindestens eine zumindest teilweise durchgehende Ausnehmung auf. Nach dem Aushärten des Verbundteils wird eine LED-Anordnung in der Ausnehmung angeordnet und elektrisch kontaktiert. In einem abschließenden Schritt wird die Ausnehmung mit einer Abdeckung verschlossen.

Die äußere transparente polymere Schicht wird bevorzugt mit einem Hardcoat versehen. Das Auftragen des Hardcoats erfolgt bevorzugt über Sprühverfahren oder Flutbeschichtung.

Die Erfindung umfasst des Weiteren die Verwendung der erfindungsgemäßen polymeren Fahrzeugscheibe als Seitenscheibe, bevorzugt als feststehende hintere Seitenscheibe, oder Heckscheibe eines Kraftfahrzeuges, besonders bevorzugt PKW, LKW oder Bus.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 eine seitliche Ansicht einer erfindungsgemäßen Fahrzeugscheibe,
Figur 2 eine schematische dreidimensionale Ansicht der erfindungsgemäßen Fahrzeugscheibe,
Figur 3 einen Ausschnitt der Fahrzeugscheibe im Bereich der Ausnehmungen,
Figur 4 einen weiteren Ausschnitt der Fahrzeugscheibe im Bereich der Ausnehmungen,
Figur 5 einen weiteren vergrößerten Ausschnitt im Bereich der Ausnehmungen,
Figur 6 eine alternative Ausführungsform im Bereich der Ausnehmungen und
Figur 7 eine schematische Draufsicht der erfindungsgemäßen Fahrzeugscheibe.

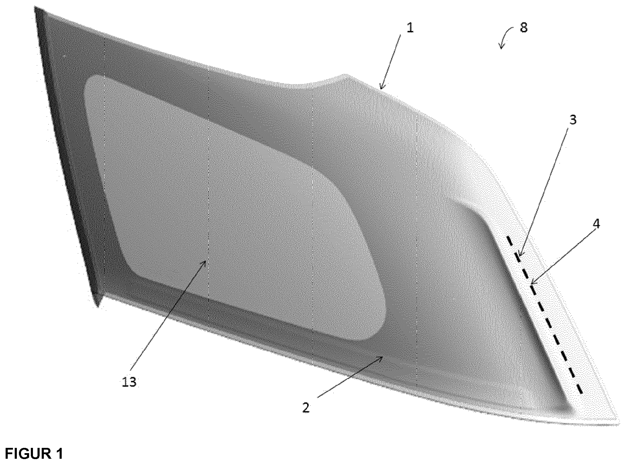

Figur 1 zeigt eine seitliche Ansicht der erfindungsgemäßen Fahrzeugscheibe. Die Fahrzeugscheibe ist eine hintere Seitenscheibe. Das Verbundbauteil (8) umfasst eine im Randbereich angedeutete, innere opake polymere Schicht (1) und eine äußere transparente polymere Schicht (2). Im Bereich der Fensterausnehmung (13) fehlt die innere opake polymere Schicht (1) und bildet den transparenten Fensterbereich. Im Bereich der gestrichelt angedeuteten Linie sind die Ausnehmungen (3) und die LED- Anordnungen (4) angebracht. Bevorzugt umfasst das Verbundbauteil (8) 2 bis 50 Ausnehmungen (3) mit LED - Anordnungen (4), optional können die LED-Anordnungen auch mit nicht gezeigten Lichtleitern, beispielsweise Glasfaser, kombiniert werden.

Die Erfindung wird hier zwar beispielhaft für eine hintere Seitenscheibe beschrieben, ist aber in gleicher Weise auch beispielsweise für Heckscheiben anwendbar.

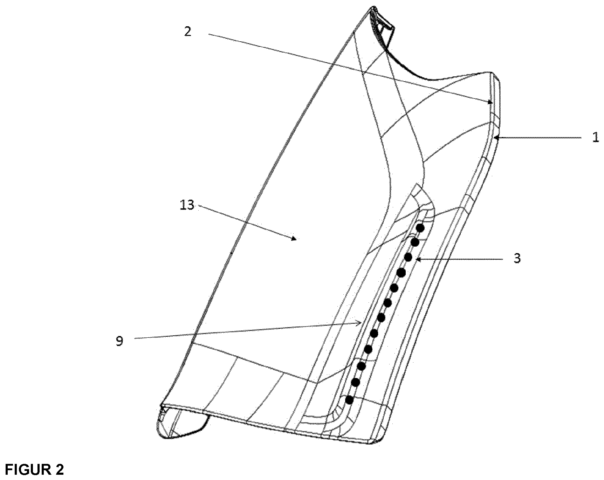

Figur 2 zeigt eine schematische dreidimensionale Ansicht der erfindungsgemäßen hinteren Seitenscheibe. Den Grundaufbau bilden die innere opake polymere Schicht (1) und eine äußere transparente polymere Schicht (2). Im Bereich einer Erhebung (9) der inneren opaken polymeren Schicht (1) und der äußeren transparenten polymeren Schicht (2) sind die Ausnehmungen (3) in der inneren opaken polymeren Schicht (1) in Form von zylinderförmigen Öffnungen angeordnet.

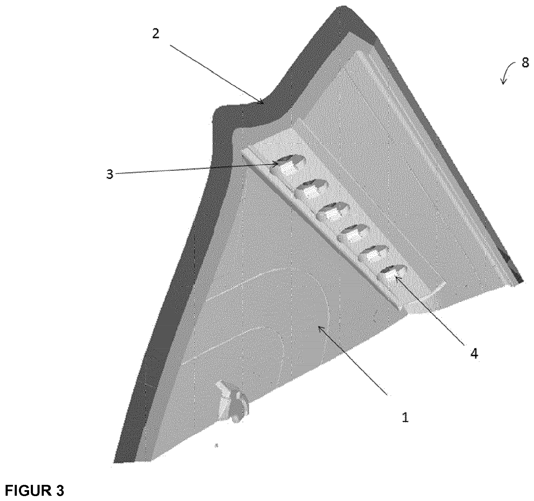

Figur 3 zeigt einen Ausschnitt des Verbundteils (8) im Bereich der Ausnehmungen (3). Die LED-Anordnungen sind innerhalb der Ausnehmungen (3) der inneren opaken polymeren Schicht (1) angeordnet und emittieren über die nicht gezeigten LEDs (5) Licht über die äußere transparente polymere Schicht (2) nach außen.

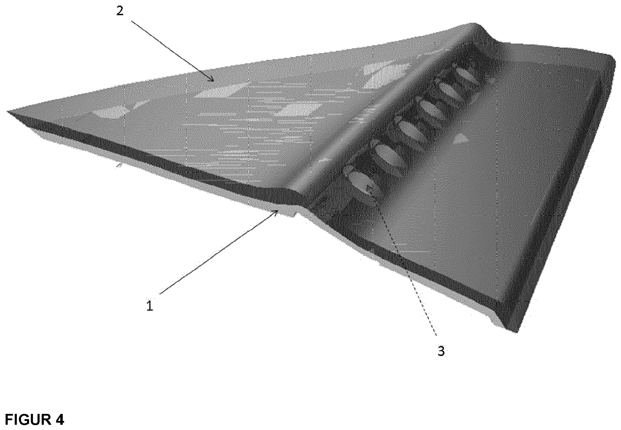

Figur 4 zeigt einen weiteren Ausschnitt des Verbundteils (8) in Blickrichtung auf die äußere transparente polymere Schicht (2). Der Aufbau entspricht dem in Figur 3 beschriebenen.

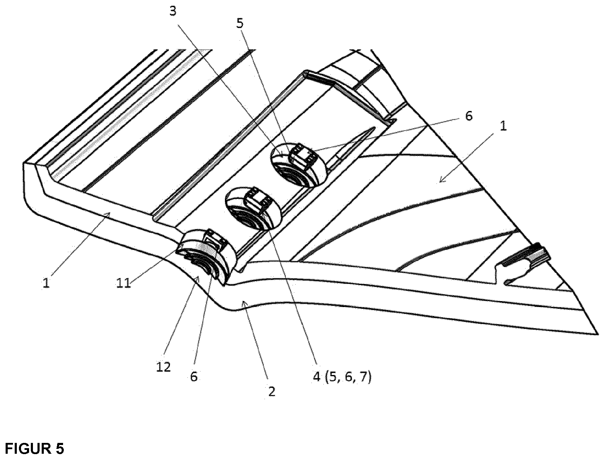

Figur 5 zeigt einen weiteren vergrößerten Ausschnitt des Verbundteils (8) im Bereich der Ausnehmungen (3). Der Aufbau entspricht dem in Figur 3 und 4 beschriebenen. In den Ausnehmungen (3) sind die LED-Anordnungen (4) aus LED (5), Platine (6) und elektrischer Kontaktierung (7) angebracht. Die Ausnehmungen (3) werden durch eine Zusatzausnehmung (11) in der äußeren transparenten polymeren Schicht (2) erweitert. Die Zusatzausnehmungen (11) umfassen auch Reflektionsflächen (12), welche eine weitere Variierung des von der LED-Anordnung abgestrahlten Lichts ermöglichen.

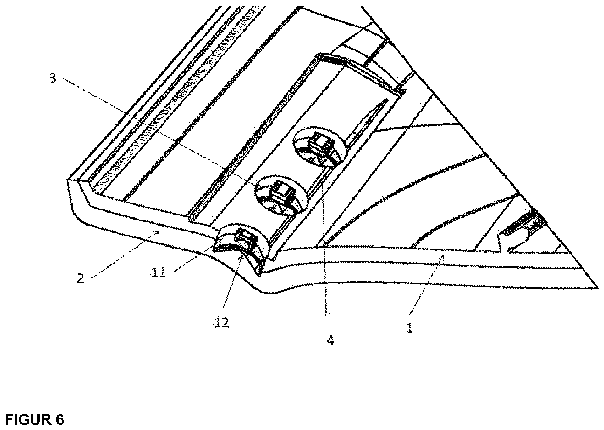

Figur 6 zeigt eine alternative Ausführungsform im Bereich der Ausnehmungen (3). Der Aufbau entspricht dem in Figur 5 gezeigten. Die Zusatzausnehmungen (11) umfassen auch kantige Reflektionsflächen, (12) welche eine zusätzliche Lichtstreuung bewirken.

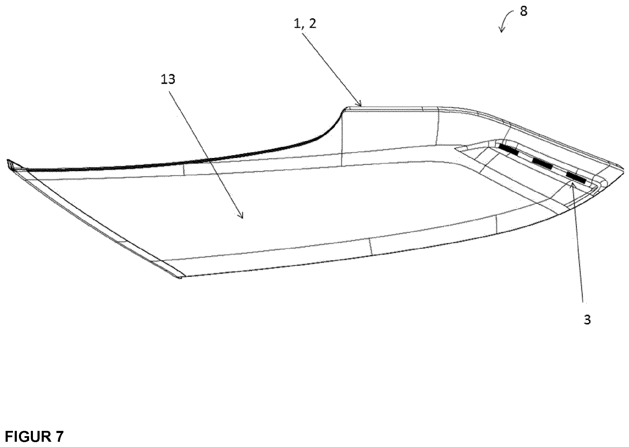

Figur 7 zeigt eine schematische Draufsicht der horizontal ausgerichteten erfindungsgemäßen hinteren Seitenscheibe. Der Aufbau entspricht dem in Figur 2 gezeigten Aufbau aus der Draufsicht.

### Bezugszeichenliste

- (1): innere opake polymere Schicht
- (2): äußere transparente polymere Schicht
- (3): Ausnehmung
- (4): LED-Anordnung
- (5): LED oder OLED
- (6): Platine
- (7): elektrische Kontaktierung
- (8): Verbundbauteil
- (9): Erhöhung
- (10): Vertiefung
- (11): Zusatzausnehmung (in der äußeren transparenten polymeren Schicht)
- (12): Reflektionsflächen
- (13): Fensterausnehmung
- (14): Abdeckung
- (15): Hardcoat

## Patentansprüche

1. Polymere Fahrzeugscheibe, mit einem Verbundbauteil (8), das eine innere opake polymere Schicht (1) und eine äußere transparente polymere Schicht (2) umfasst, wobei die innere opake polymere Schicht (1) und die äußere transparente polymere Schicht (2) flächig verbunden sind, wobei die innere opake polymere Schicht (1) mindestens eine zumindest teilweise durchgehende Ausnehmung (3) aufweist, wobei in der Ausnehmung (3) eine LED-Anordnung (4), welche eine LED (5), eine Platine (PCB) (6) und eine elektrische Kontaktierung (7) umfasst, angeordnet ist, wobei die LED-Anordnung (4) so platziert ist, dass die LED (5) in Richtung der äußeren transparenten Schicht (2) gerichtet ist.

2. Fahrzeugscheibe nach Anspruch 1, die eine Seitenscheibe, bevorzugt eine feststehende hintere Seitenscheibe, oder eine Heckscheibe ist.

3. Fahrzeugscheibe nach Anspruch 1 oder 2, wobei die äußere transparente polymere Schicht (2) eine Erhöhung (9) oder Vertiefung (10) im Bereich der Ausnehmung (3) der inneren opaken polymeren Schicht (1) aufweist.

4. Fahrzeugscheibe nach einem der Ansprüche 1 bis 3, wobei die Ausnehmung (3) eine Abdeckung (14) aufweist.

5. Fahrzeugscheibe nach einem der Ansprüche 1 bis 4, wobei die äußere transparente polymere Schicht (2) eine Zusatzausnehmung (11) im Bereich der Ausnehmung (3) der inneren opaken polymeren Schicht (1) aufweist.

6. Fahrzeugscheibe nach Anspruch 5, wobei die Ausnehmung (3) und/oder Zusatzausnehmung (11) eckige bevorzugt kreisförmige, schlitzförmige und/oder abgerundete Reflektionsflächen (12) aufweist.

7. Fahrzeugscheibe nach einem der Ansprüche 1 bis 6, wobei die innere opake polymere Schicht (1) und die äußere transparente polymere Schicht (2) Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, bevorzugt Acrylnitril-Butadien-Styrol (ABS), Acrylester-Styrol-Acrylnitril (ASA), Acrylnitril-Butadien-Styrol - Polycarbonat (ABS/PC), Polyethylenterephthalat - Polycarbonat (PET/PC) und/oder Copolymere oder Gemische davon enthält.

8. Fahrzeugscheibe nach einem der Ansprüche 1 bis 7, wobei die äußere transparente polymere Schicht (2) Polycarbonate (PC), Polymethylmethacrylat (PMMA), Styrol-Acrylnitril (SAN) und/oder Copolymere oder Gemische davon enthält.

9. Fahrzeugscheibe nach einem der Ansprüche 1 bis 8, wobei die äußere transparente polymere Schicht (2) einen Hardcoat, bevorzugt thermische- oder UV-härtende Lacke, besonders bevorzugt Polysiloxane, Polyacrylate, Polymethacrylate und/oder Gemische oder Copolymere davon enthält.

10. Fahrzeugscheibe nach einem der Ansprüche 1 bis 9, wobei die innere opake polymere Schicht (1) anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthält.

11. Fahrzeugscheibe nach einem der Ansprüche 1 bis 10, wobei die innere opake polymere Schicht (1) eine großflächige Fensterausnehmung (13), bevorzugt im Bereich von 20 Volumen % bis 80 Volumen %, aufweist.

12. Fahrzeugscheibe nach einem der Ansprüche 1 bis 11, wobei die LED-Anordnung (4) mit Lichtleitern verbunden ist.

13. Verfahren zur Herstellung einer polymeren Fahrzeugscheibe, wobei
a. ein Verbundbauteil (8), das eine innere opake polymere Schicht (1) und eine äußere transparente polymere Schicht (2) umfasst, in einem 2 Komponentenspritz-gussverfahren oder 2 Komponentenspritzprägeverfahren erhalten wird, wobei die innere opake polymere Schicht (1) mindestens eine zumindest teilweise durchgehende Ausnehmung (3) aufweist,
b. eine LED-Anordnung (4) in der Ausnehmung (3) angeordnet und kontaktiert wird und
c. die Ausnehmung (3) mit einer Abdeckung (14) verschlossen wird.

14. Verfahren nach Anspruch 13, wobei die äußere transparente polymere Schicht (2) mit einem Hardcoat (15)versehen wird.

15. Verwendung einer polymeren Fahrzeugscheibe nach einem der Ansprüche 1 bis 12 als Seitenscheibe, bevorzugt als feststehende hintere Seitenscheibe, oder als Heckscheibe eines Kraftfahrzeuges, bevorzugt PKW, LKW oder Bus.

## Claims

1. Polymeric vehicle window pane, having a composite component (8) that comprises an inner opaque polymeric layer (1) and an outer transparent polymeric layer (2), wherein the inner opaque polymeric layer (1) and the outer transparent polymeric layer (2) are bonded in a laminar manner, wherein the inner opaque polymeric layer (1) has at least one at least partially penetrating recess (3), wherein an LED assembly (4) which comprises an LED (5), a printed circuit board (PCB) (6) and an electrical contacting (7) is arranged in the recess (3), wherein the LED assembly (4) is placed such that the LED (5) is directed in the direction of the outer transparent polymeric layer (2).

2. Vehicle window pane according to claim 1, which is a side window pane, preferably a stationary rear side window pane, or a rear window pane.

3. Vehicle window pane according to claim 1 or 2, wherein the outer transparent polymeric layer (2) has an elevation (9) or depression (10) in the region of the recess (3) of the inner opaque polymeric layer (1).

4. Vehicle window pane according to one of claims 1 through 3, wherein the recess (3) has a cover (14).

5. Vehicle window pane according to one of claims 1 through 4, wherein the outer transparent polymeric layer (2) has an additional recess (11) in the region of the recess (3) of the inner opaque polymeric layer (1).

6. Vehicle window pane according to claim 5, wherein the recess (3) and/or additional recess (11) has angular, preferably circular, slit-shaped and/or rounded reflective surfaces (12).

7. Vehicle window pane according to one of claims 1 through 6, wherein the inner opaque polymeric layer (1) and the outer transparent polymeric layer (2) contain polyethylene (PE), polycarbonates (PC), polypropylene (PP), polystyrene, polybutadiene, polynitriles, polyesters, polyurethanes, polymethyl methacrylates, polyacrylates, polyesters, polyamides, polyethylene terephthalate, preferably acrylonitrile-butadiene-styrene (ABS), acrylester-styrene-acrylonitrile (ASA), acrylonitrile-butadiene-styrene - polycarbonate (ABS/PC), polyethylene terephthalate - polycarbonate (PET/PC), and/or copolymers or mixtures thereof.

8. Vehicle window pane according to one of claims 1 through 7, wherein the outer transparent polymeric layer (2) contains polycarbonates (PC), polymethyl methacrylate (PMMA), styrene-acrylonitrile (SAN), and/or copolymers or mixtures thereof.

9. Vehicle window pane according to one of claims 1 through 8, wherein the outer transparent polymeric layer (2) includes a hardcoat, preferably heat-curing or UV-curing lacquer, particularly preferably polysiloxanes, polyacrylates, polymethacrylates, and/or mixtures or copolymers thereof.

10. Vehicle window pane according to one of claims 1 through 9, wherein the inner opaque polymeric layer (1) includes inorganic or organic fillers, preferably SiO₂, Al₂O₃, TiO₂, clay minerals, silicates, zeolites, glass fibers, carbon fibers, glass beads, organic fibers, and/or mixtures thereof.

11. Vehicle window pane according to one of claims 1 through 10, wherein the inner opaque polymeric layer (1) has a large window opening (13), preferably in the range from 20 vol.-% to 80 vol.-%.

12. Vehicle window pane according to one of claims 1 through 11, wherein the LED assembly (4) is connected to light guides.

13. Method for producing a polymeric vehicle window pane, wherein
a. a composite component (8), that comprises an inner opaque polymeric layer (1) and an outer transparent polymeric layer (2) is obtained in a two-component injection molding process or a two-component injection-compression molding process, wherein the inner opaque polymeric layer (1) has at least one at least partially penetrating recess (3),
b. an LED assembly (4) is arranged in the recess (3) and contacted, and
c. the recess (3) is closed with a cover (14).

14. Method according to claim 13, wherein the outer transparent polymeric layer (2) is provided with a hardcoat (15).

15. Use of a polymeric vehicle window pane according to one of claims 1 through 12 as a side window pane, preferably as a stationary rear side window pane, or as a rear window pane of a motor vehicle, preferably a car, truck, or bus.

## Revendications

1. Vitre polymérique de véhicule, avec un composant composite (8), qui comprenant une couche polymérique intérieure opaque (1) et une couche polymérique extérieure transparente (2), où la couche polymérique intérieure opaque (1) et la couche polymérique extérieure transparente (2) sont reliées par la surface, où la couche polymérique intérieure opaque (1) présente au moins un évidement (3) au moins partiellement continue, où un panneau à LED (4), qui comprend un LED (5), un circuit imprimé (PCB) (6) et un contact électrique (7), est disposé dans l'évidement (3) où le panneau à LED (4) est positionné tel que la LED (5) est dirigée vers la couche polymérique extérieure transparente (2).

2. Vitre de véhicule selon la revendication 1 qui présente une fenêtre latérale, de préférence une fenêtre latérale arrière fixe, ou une vitre arrière.

3. Vitre de véhicule selon la revendication 1 ou 2, où la couche polymérique extérieure transparente (2) présente un relief (9) ou un creux (10) dans la région de l'évidement (3) de la couche polymérique intérieure opaque (1)

4. Vitre de véhicule selon l'une des revendications 1 à 3, ou l'évidement (3) présente un couvercle (14).

5. Vitre de véhicule selon l'une des revendications 1 à 4, où la couche polymérique extérieure transparente (2) présente un évidement supplémentaire (11) dans la région de l'évidemment (3) de la couche polymérique intérieure opaque (1).

6. Vitre de véhicule selon la revendication 5, où l'évidement (3) et/ou l'évidement supplémentaire (11) présente des surfaces de réflexion de préférence circulaires, en forme de fente et/ou arrondies (12).

7. Vitre de véhicule selon l'une des revendications 1 à 6, où la couche polymérique intérieure opaque (1) et la couche polymérique extérieure transparente (2) contient du polyéthylène (PE), du polycarbonate (PC), du polypropylène (PP), du polystyrène, du polybutadiène, des polynitriles, du polyester, du polyuréthane, du polyméthacrylate de méthyle, du polyacrylate, du polyester, du polyamide, du polyéthylène téréphtalate, de préférence de l'acrylonitrile butadiène styrène (ABS), de l'acrylonitrile styrène-acrylate (ASA), l'acrylonitrile butadiène styrène-polycarbonate (ABS/PC), polyéthylène téréphtalate-polycarbonate (PET/PC) et/ou des copolymères ou mélanges de ceux-ci.

8. Vitre de véhicule selon l'une des revendications 1 à 7, où la couche polymérique extérieure transparente (2) contient des polycarbonates (PC), du polyméthacrylate de méthyle (PMMA), du styrène-acrylonitrile (SAN) et/ou des copolymères ou des mélanges de ceux-ci.

9. Vitre de véhicule selon l'une des revendications 1 à 8, où la couche polymérique extérieure transparente (2) contient un revêtement dur, de préférence des vernis à durcissement thermique ou aux UV, de manière particulièrement préférée des polysiloxanes, des polyacrylates, des polyméthacrylates et/ou des mélanges ou des copolymères de ceux-ci.

10. Vitre de véhicule selon l'une des revendications 1 à 9, où la couche polymérique intérieure opaque (1) contient des charges inorganiques ou organiques, de préférence SiO₂, Al₂O₃, TiO₂, des minéraux argileux, des silicates, des zéolites, des fibres de verre, des fibres de carbone, des perles de verre, des fibres organiques et/ou des mélanges de ceux-ci.

11. Vitre de véhicule selon l'une des revendications 1 à 10, où la couche polymérique intérieure opaque (1) présente une cavité de grande surface pour une fenêtre (13), de préférence dans une gamme entre 20% et 80% de volume.

12. Vitre de véhicule selon l'une des revendications 1 à 11, où le panneau à LED (4) est relié avec des fibres optiques.

13. Méthode de fabrication d'une vitre polymérique de véhicule, où
a. un composant de composite (8) qui comprend une couche polymérique intérieure opaque (1) et une couche polymérique extérieure transparente (2), qui est obtenu par un procédé de moulage par injection à deux composants ou d'estampage par injection à deux composants, où une couche polymérique intérieure opaque (1) présente au moins un évidement (3) au moins partiellement continue,
b. un panneau à LED (4) est disposé dans l'évidement (3) et est contacté et
c. l'évidement (3) est fermé avec un couvercle (14).

14. Procédure selon la revendication 13, où la couche polymérique extérieure transparente (2) est pourvue d'un revêtement dur (15).

15. Utilisation d'une vitre polymérique de véhicule selon l'une des revendications 1 à 12 comme fenêtre latérale, de préférence comme une fenêtre latérale arrière fixe ou comme une vitre arrière d'un véhicule automobile, de préférence d'une voiture, d'un camion ou d'un autobus.
